# EUROPEAN PATENT APPLICATION

(11) **EP 3 823 232 A1**
(43) Date of publication of application: **19.05.2021**
(21) Application number: 18925923.7
(22) Date of filing: 12.07.2018
(51) Int. Cl.: H04L 27/26

(54) **USER EQUIPMENT AND BASE STATION**

(71) Applicant: NTT DoCoMo, Inc., Tokyo 100-6150 (JP)
(72) Inventor: MATSUMURA, Yuki, Tokyo 100-6150 (JP); NAGATA, Satoshi, Tokyo 100-6150 (JP); LI, Huiling, Beijing 100190 (CN); WANG, Jing, Beijing 100190 (CN); HOU, Xiaolin, Beijing 100190 (CN)
(74) Representative: Hoffmann Eitle
(86) International application number: PCT/JP2018/026395
(87) International publication number: WO 2020/012620

(57) **Abstract**

A user terminal according to one aspect of the present disclosure includes: a transmission section that transmits a CSI reporting using at least one specific subband that is part of a plurality of subbands; and a control section that performs at least one of reception of configuration information that indicates the specific subband, and transmission of reporting information that indicates the specific subband. According to one aspect of the present disclosure, it is possible to appropriately perform a CSI reporting using subbands.

## Description

### Technical Field

The present disclosure relates to a user terminal and a base station of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

In legacy LTE systems (e.g., LTE Rel. 8 to 13), a user terminal (UE: User Equipment) periodically and/or aperiodically transmits Channel State Information (CSI) to a base station. The UE transmits the CSI by using an uplink control channel (PUCCH: Physical Uplink Control Channel) and/or an uplink shared channel (PUSCH: Physical Uplink Shared Channel).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

A CSI reporting that uses a plurality of subbands is studied for a future radio communication system (e.g., NR).

However, when configuration of the CSI reporting that uses a plurality of subbands, and the CSI reporting are not appropriately performed, there is a risk that an overhead increases and system performance lowers.

It is therefore one of objects of the present disclosure to provide a user terminal and a base station that can appropriately perform a CSI reporting using subbands.

### Solution to Problem

A user terminal according to one aspect of the present disclosure includes: a transmission section that transmits a CSI reporting using at least one specific subband that is part of a plurality of subbands; and a control section that performs at least one of reception of configuration information that indicates the specific subband, and transmission of reporting information that indicates the specific subband.

### Advantageous Effects of Invention

According to one aspect of the present disclosure, it is possible to appropriately perform a CSI reporting using subbands.

### Brief Description of Drawings

Fig. 1 is a diagram illustrating one example of an overhead of type 2-CSI feedback.
Figs. 2A and 2B are diagrams illustrating one example of a partial subband CSI reporting according to an embodiment.
Figs. 3A and 3B are diagrams illustrating one example of a partial subband CSI reporting according to aspect 1-1-1.
Figs. 4A and 4B are diagrams illustrating one example of a partial subband CSI reporting according to aspect 1-1-2.
Figs. 5A and 5B are diagrams illustrating one example of a partial subband CSI reporting according to aspect 1-1-3.
Figs. 6A and 6B are diagrams illustrating one example of a partial subband CSI reporting according to aspect 1-2-1.
Figs. 7A and 7B are diagrams illustrating one example of a partial subband CSI reporting according to aspect 1-2-2.
Figs. 8A and 8B are diagrams illustrating one example of a partial subband CSI reporting according to aspect 1-3.
Fig. 9 is a diagram illustrating one example of a plurality of CSI parameters in one CSI reporting packet.
Fig. 10 is a diagram illustrating one example of a plurality of CSI parameters in two CSI reporting packets.
Fig. 11 is a diagram illustrating one example of a schematic configuration of a radio communication system according to one embodiment.
Fig. 12 is a diagram illustrating one example of an overall configuration of the base station according to the one embodiment.
Fig. 13 is a diagram illustrating one example of a function configuration of the base station according to the one embodiment.
Fig. 14 is a diagram illustrating one example of an overall configuration of a user terminal according to the one embodiment.
Fig. 15 is a diagram illustrating one example of a function configuration of the user terminal according to the one embodiment.
Fig. 16 is a diagram illustrating one example of hardware configurations of the base station and the user terminal according to the one embodiment.

### Description of Embodiments

According to NR, a UE measures a channel state by using a given reference signal (or a resource for the given reference signal). The reference signal for channel state measurement may be referred to as a Channel State Information-Reference Signal (CSI-RS). In addition, the UE may measure a channel state by using signals (e.g., a Synchronization Signal/Physical Broadcast Channel (SS/PBCH) block, a synchronization signal and a demodulation reference signal) other than the CSI-RS.

The CSI-RS resource may include at least one of a Non Zero Power (NZP) CSI-RS and CSI-Interference Management (IM). Furthermore, the SS/PBCH block is a block that includes a Primary Synchronization Signal (PSS), a Secondary Synchronization Signal (SSS) and a PBCH, and may be referred to as an SS block.

The UE feeds back (reports) Channel State Information (CSI) to a base station (that may be referred to as, for example, a BS (Base Station), a Transmission/Reception Point (TRP), an eNodeB (eNB) and a gNB (NR NodeB)) at a given timing based on a measurement result of, for example, the reference signal.

In addition, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI) and a Layer 1 Reference Signal Received Power (L1-RSRP).

The CSI may include a plurality of parts. A first part (CSI part 1) of the CSI may include information (e.g., RI) of a relatively small number of bits. A second part (CSI part 2) of the CSI may include information (e.g., CQI) of a relatively large number of bits such as information determined based on the CSI part 1.

As a CSI feedback method, (1) a Periodic CSI (P-CSI) reporting, (2) an Aperiodic CSI (A-CSI) reporting and (3) a Semi-Permanent (semi-continuous or Semi-Persistent) CSI reporting (SP-CSI) are studied.

The UE may be notified of information (that may be referred to as CSI reporting configuration information) related to a resource for reporting at least one CSI of P-CSI, SP-CSI and A-CSI by using a higher layer signaling, a physical layer signaling (e.g., Downlink Control Information (DCI)) or a combination of these signalings.

In this regard, the higher layer signaling may be one or a combination of, for example, a Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB), a System Information Block (SIB), a Remaining Minimum System Information (RMSI), or Other System Information (OSI).

CSI reporting configuration information (CSI-ReportConfig) may include, for example, information related to a reporting periodicity and an offset, and these given periodicity and offset may be expressed in a given time unit (a slot unit, a subframe unit or a symbol unit). The CSI reporting configuration information may include a configuration ID (CSI-ReportConfigId), and parameters such as a CSI reporting method type (SP-CSI or not) and the reporting periodicity may be specified based on the configuration ID. The CSI reporting configuration information may include information (CSI-ResourceConfigId) that indicates which CSI measured by using which reference signal (or which reference signal resource) to report.

A plurality of CSI types may be configured according to usage applications (or a communication function). For example, a CSI type (also referred to as type 1 (type I)-CSI) configured to perform communication that uses a single beam, and a CSI type (also referred to as type 2 (type II)-CSI) configured to perform communication that uses multiple beams may be defined. Naturally, the usage applications of the CSI types are not limited to these.

The UE and the base station may use the type 1-CSI to maintain a coarse link that uses the single beam. Furthermore, the UE and the base station may use the type 2-CSI to establish a link that uses the multiple beams (e.g., a plurality of layers). For example, the type 2-CSI may be configured to include information (or beam related information such as a beam number) per layer.

Furthermore, the UE and the base station may perform control to report only part of CSI parameters of the information types (CSI parameters) of the type 2-CSI. CSI including part of the information types may be referred to as partial type 2-CSI.

When transmitting the type 1-CSI by using an uplink control channel, the UE reports, for example, an RI and/or a CSI-RS Resource Indicator (CRI), a PMI and a CQI as CSI parameters. In addition, as the PMI, a PMI 1 of a wideband and a long feedback duration, and a PMI 2 of a subband and a short feedback duration may be included. In addition, the PMI 1 is used to select a vector W1, the PMI 2 is used to select a vector W2, and a precoder W is determined based on W1 and W2 (W = W1^{∗}W2).

Furthermore, when transmitting the partial type 2-CSI by using an uplink control channel, the UE reports, for example, the RI, the CQI and a number of non-zero wideband amplitude coefficients per layer as the CSI parameters. The number of non-zero wideband amplitude coefficients corresponds to a beam number whose amplitude is not scaled to zero. In this case, information of a beam whose amplitude becomes zero (or is equal to or less than a given threshold that can be considered as substantially zero or is less than the threshold). Consequently, by transmitting the number of non-zero wideband amplitude coefficients, it is possible to reduce an overhead of the PMI.

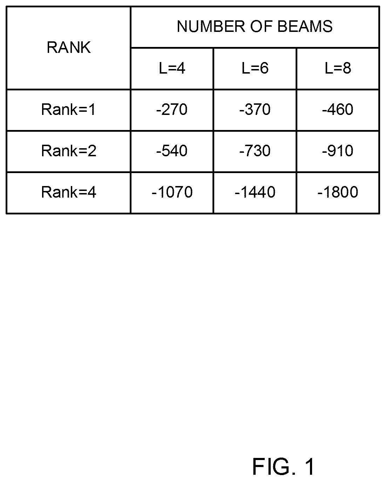

The type 2-CSI feedback brings a large overhead, and therefore it is necessary to calculate an overhead of the type 2-CSI feedback. As illustrated in Fig. 1, when a supported rank is higher and the number of combinations of beams is larger, an overhead (an absolute value of a negative value) is larger.

Hence, it is studied to reduce the overhead of the type 2-CSI feedback.

To enhance Multi-User (MU)-Multi-Input Multi-Output (MIMO), it is studied to reduce the overhead of the type 2-CSI feedback by taking into account a tradeoff between performance and the overhead. Furthermore, to enhance MU-MIMO, it is studied to enhance the type 2-CSI feedback to a rank larger than 2.

According to a legacy subband CSI reporting, when a subband CSI reporting is configured, CSI parameters are reported for all subbands, which brings a high overhead.

Hence, the inventors of the present invention have conceived a method for suppressing an increase in an overhead of at least one of configuration and reporting and a signaling design for a CSI reporting that uses subbands.

An embodiment according to the present disclosure will be described in detail below with reference to the drawings. A radio communication method according to each embodiment may be each applied alone, or may be applied in combination.

In the following description, the CSI reporting may be read as at least one of CSI measurement and a CSI reporting.

The UE may perform a partial subband CSI reporting for performing a CSI reporting using part of a plurality of subbands to reduce a CSI overhead.

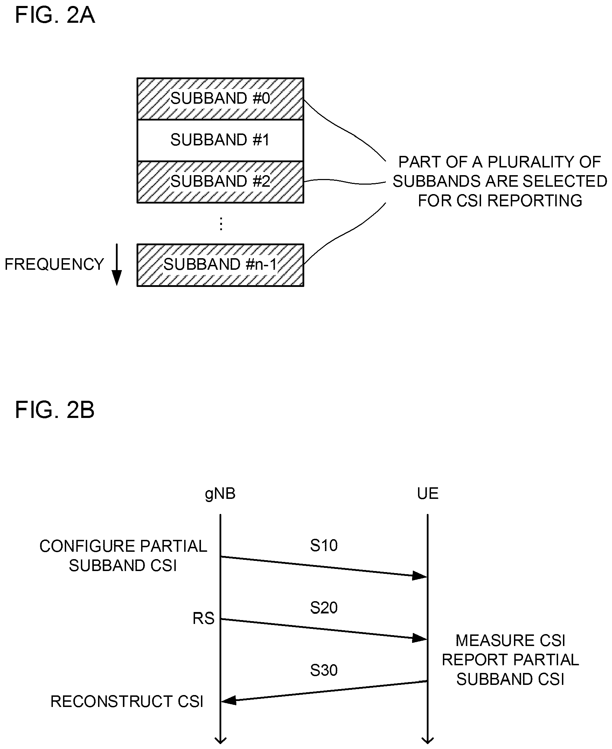

As illustrated in Fig. 2A, the UE performs a CSI reporting (CSI measurement) by using part of a plurality of contiguous subbands. A plurality of subbands may make up a band, a Component Carrier (CC), a BandWidth Part (a BWP or a partial band). Each subband may be a given number of Resource Blocks (RBs). In this case, subbands #0, #2 and #n-1 among subbands #0 to #n-1 are selected for a CSI reporting.

Fig. 2B illustrates an outline of a partial subband CSI reporting procedure. A gNB (such as a base station, an eNB or a network) configures partial subband CSI in S10, and transmits a reference signal for channel state measurement (a Reference Signal: RS or a synchronization signal) in S20. The UE performs CSI measurement based on the partial subband CSI configuration, and transmits a CSI parameter by the partial subband CSI reporting in S30. The gNB obtains the CSI by reconstructing the CSI based on the received CSI parameter.

A signaling needs to be designed to support the partial subband CSI reporting. Furthermore, which one of the UE and the gNB selects subbands for a CSI reporting, which subband is selected, how to instruct selection of the subbands, and a UE operation during the partial subband CSI reporting are necessary.

One of following options 1 and 2 may be used to apply the partial subband CSI reporting.

### <Option 1>

The partial subband CSI reporting is applied at all times.

### <Option 2>

The partial subband CSI reporting is applied when configured. When the partial subband CSI reporting is configured to the UE by an RRC signaling or broadcast information, the UE may apply the partial subband CSI reporting. When the partial subband CSI reporting is not configured to the UE by the RRC signaling or the broadcast information, the UE may not apply the partial subband CSI reporting. In this case, the UE may apply full band CSI feedback. That is, the UE may not apply reduction of a CSI overhead.

### <Aspect 1>

Aspect 1 will describe a subband selection method.

At least one of a UE and a gNB may follow one of following aspects 1-1 to 1-3.

### <<Aspect 1-1>>

The gNB may select (determine) subbands (specific subbands) for a CSI reporting. The gNB may notify the UE of information (configuration information) that indicates the selected subbands.

The gNB may follow one of following aspects 1-1-1 to 1-1-3.

### <<Aspect 1-1-1>>

The gNB may select subbands for a CSI reporting according to a subband pattern specified in advance. The gNB may select one subband pattern from at least one subband pattern specified in advance. The subband pattern may indicate some subbands for a CSI reporting among a plurality of subbands.

The subband pattern may be specified by a specification. N subband patterns may be specified. Each subband pattern may indicate whether or not each of M subbands is used for the CSI reporting.

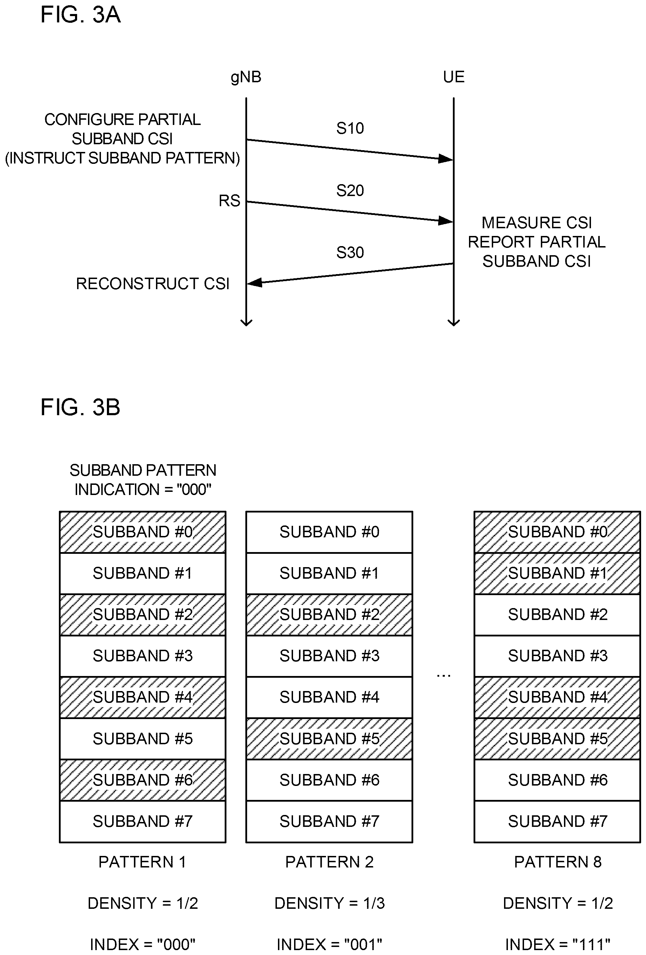

As illustrated in Fig. 3A, the gNB may configure CSI reporting configuration information (partial subband CSI reporting configuration information) that indicates a configuration to obtain partial subband CSI to the UE in S10. The partial subband CSI reporting configuration information may be CSI reporting configuration information (CSI-ReportConfig) including a higher layer parameter (a partial subband CSI indication parameter or partial_subband_CSI) that indicates the configuration to obtain the partial subband CSI.

If only one subband pattern is specified in advance, the UE may use fixed subbands indicated by the subband pattern for the CSI reporting.

If subband patterns the number of which is larger than 1 are specified in advance, the gNB may configure one subband pattern to the UE by an additional signaling (a subband pattern indication parameter or identification information). The subband pattern indication parameter may indicate a subband pattern index (ID).

The subband pattern indication parameter may be notified by at least one of an RRC signaling, an MAC CE and DCI.

The gNB may give notification of the subband pattern indication parameter by the RRC signaling. In this case, the subband pattern indication parameter (subband_pattern) may be introduced as a new RRC parameter. The subband pattern indication parameter may be included in the partial subband CSI reporting configuration information.

The gNB may give notification of the subband pattern indication parameter by DCI. In this case, a legacy DCI field may be reused to give notification of a subband pattern. The legacy DCI field may be a CSI activation/deactivation field or a CSI request field. A new DCI field for giving notification of a subband pattern may be introduced.

Fig. 3B illustrates a case where N is 8 and M is 8. When eight subband patterns are specified in advance, a subband pattern indication parameter may be 3 bits ("000" to "111"). When, for example, selecting a subband pattern 1 as illustrated in Fig. 3B, the gNB may configure "000" as the subband pattern indication parameter to the UE.

According to the subband pattern 1, the density of subbands used for a CSI reporting may be 1/2, and four subbands of the eight subbands may be used for the CSI reporting. In addition, the subbands that are used for the CSI reporting, and subbands that are not used for the CSI reporting may be alternately arranged. According to a subband pattern 2, the density of the subbands used for the CSI reporting may be 1/3. In addition, two subbands that are not used for the CSI reporting, and one subband that is used for the CSI reporting may be alternately arranged. The density of the subband pattern 2 may be expressed as 1/4 based on the total number of subbands and the number of subbands for the CSI reporting. According to the subband pattern 8, the density of subbands used for the CSI reporting may be 1/2, and four subbands of the eight subbands may be used for the CSI reporting. In addition, two subbands that are used for the CSI reporting, and two subbands that are not used for the CSI reporting may be alternately arranged.

In S30, the UE performs a CSI reporting using subbands indicated by the subband pattern indication parameter.

According to this aspect 1-1-1, by notifying the UE of a subband pattern index, the gNB can suppress an overhead of the notification of the subbands for the CSI reporting. Furthermore, the UE does not need to report the subbands for the CSI reporting to the gNB.

### <<Aspect 1-1-2>>

The gNB may select subbands for a CSI reporting based on a ratio of subbands. The gNB may select one ratio from at least one ratio specified in advance.

The gNB may configure the subbands for the CSI reporting among a plurality of subbands to the UE by a signaling (subband indication parameter) including at least one of a parameter (starting_subband) that indicates a starting point of the subbands for the CSI reporting, a parameter (radio (density)) that indicates a ratio (the density or the quantity) related to the subbands for the CSI reporting, and a number of contiguous subbands for the CSI reporting.

The ratio may be (the number of subbands for the CSI reporting)/(the total number of subbands), or may be (the number of subbands that are not used for a CSI reporting)/(the number of subbands for the CSI reporting). When (the number of subbands that are not used for a CSI reporting)/(the number of subbands for the CSI reporting) is P, (the number of subbands for the CSI reporting)/(the total number of subbands) is expressed as 1/(1+P). The parameter that indicates the ratio may indicate whether or not the ratio is a given value or more. The given value may be 1/2. The radio may indicate at least one number (quantity) of the number of subbands that are not used for the CSI reporting, and the number of subbands for the CSI reporting.

In a case where the starting point is fixed (to, for example, a subband #0), the subband indication parameter may not include the starting point. When one selected subband and P unselected subbands are alternately arranged from the starting point, the subband indication parameter may not include the number of contiguous subbands.

The subband indication parameter may be notified by at least one of an RRC signaling, an MAC CE and DCI. The subband indication parameter may be included in partial subband CSI reporting configuration information, and may be notified to the UE by another signaling.

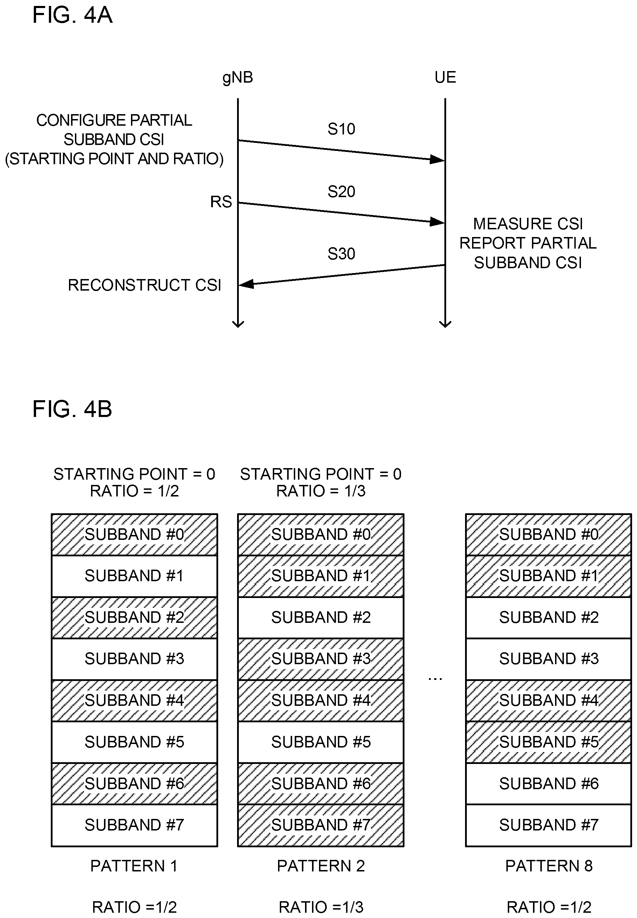

As illustrated in Fig. 4A, in S10, the gNB may configure the subband indication parameter to the UE.

In Fig. 4B, the subband indication parameter includes the starting point and the ratio ((the number of subbands for the CSI reporting)/(the total number of subbands)). The subband indication parameter whose starting point is 0 and whose ratio is 1/2 corresponds to the subband pattern 1. The subband indication parameter whose starting point is 0 and whose ratio is 1/3 corresponds to the subband pattern 2.

Furthermore, the subband indication parameter may include the starting point, the ratio and the number of contiguous subbands. For example, the subband indication parameter whose starting point is 0, whose ratio is 1/2 and whose number of contiguous subbands is 2 may correspond to the subband pattern 8.

According to this aspect 1-1-2, by notifying the UE of the ratio or the density of subbands, the gNB can suppress an overhead of notification of subbands for a CSI reporting. Furthermore, the UE does not need to report the subbands for the CSI reporting to the gNB.

### <<Aspect 1-1-3>>

The gNB may flexibly select subbands by a signaling.

By transmitting a subband selection parameter (subband_selection) that indicates some subbands as a signaling for subband selection, the gNB may configure subbands for a CSI reporting to the UE.

The subband selection parameter may be notified by at least one of an RRC signaling, an MAC CE and DCI. The RRC signaling may be included in the partial subband CSI reporting configuration information. The subband selection parameter may be included in the partial subband CSI reporting configuration information, or may be notified to the UE by another signaling.

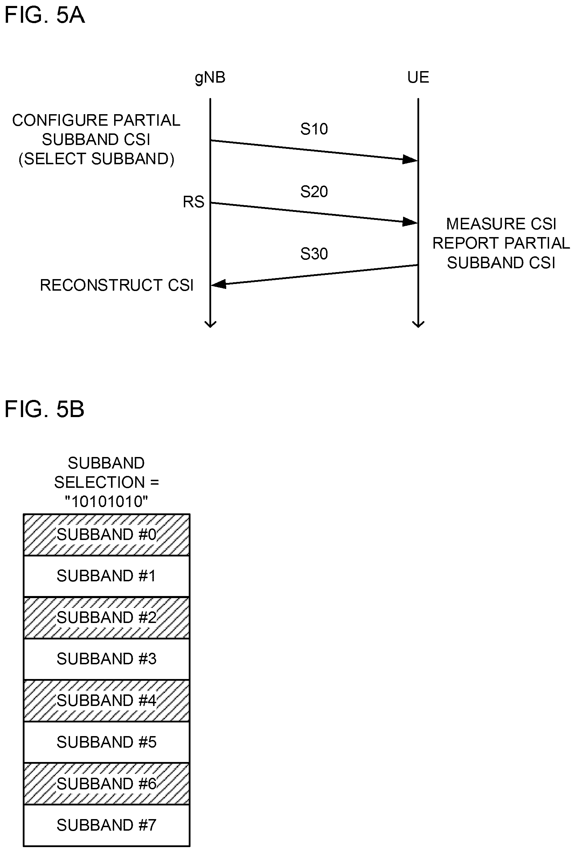

As illustrated in Fig. 5A, in S10, the gNB may configure the subband selection parameter to the UE.

The subband selection parameter may be a bitmap that has a bit length of the number of subbands. Each bit may indicate whether or not the associated subband has been selected (whether or not the associated subband is used for the CSI reporting or whether or not the associated subband is included in the specific subband).

When, for example, the number of subbands is 8, the subband selection parameter is 8 bits. When the subband selection parameter indicates "10101010", a subband pattern illustrated in Fig. 5B is configured to the UE. In this regard, "1" indicates that the associated subband has been selected, and "0" indicates that the associated subband is not selected.

According to this aspect 1-1-2, by notifying the UE of each subband for the CSI reporting, the gNB can flexibly configure each subband for the CSI reporting. By flexibly configuring each subband for the CSI reporting according to a situation, the gNB can enhance accuracy of a partial subband CSI reporting. Furthermore, the UE does not need to report each subband for the CSI reporting to the gNB.

### <<Aspect 1-2>>

The UE may select (determine) subbands (specific subbands) for a CSI reporting. The UE may transmit information (reporting information) that indicates the selected subbands to the gNB.

The UE may select the subbands for the CSI reporting according to a given rule. The UE may not be explicitly notified of the subbands for the CSI reporting. The UE may select the subbands for the CSI reporting based on a parameter obtained as a result of reception from the gNB.

The UE and the gNB may follow one of following aspects 1-2-1 and 1-2-2.

### <<Aspect 1-2-1>>

The UE may select one subband pattern from at least one subband pattern specified in advance, and report the selected subband pattern to the gNB. A new CSI parameter (e.g., a subband indicator, subband_indicator (SI) or identification information) that indicates the selected subband pattern may be introduced. The subband indicator may indicate a subband pattern index (ID).

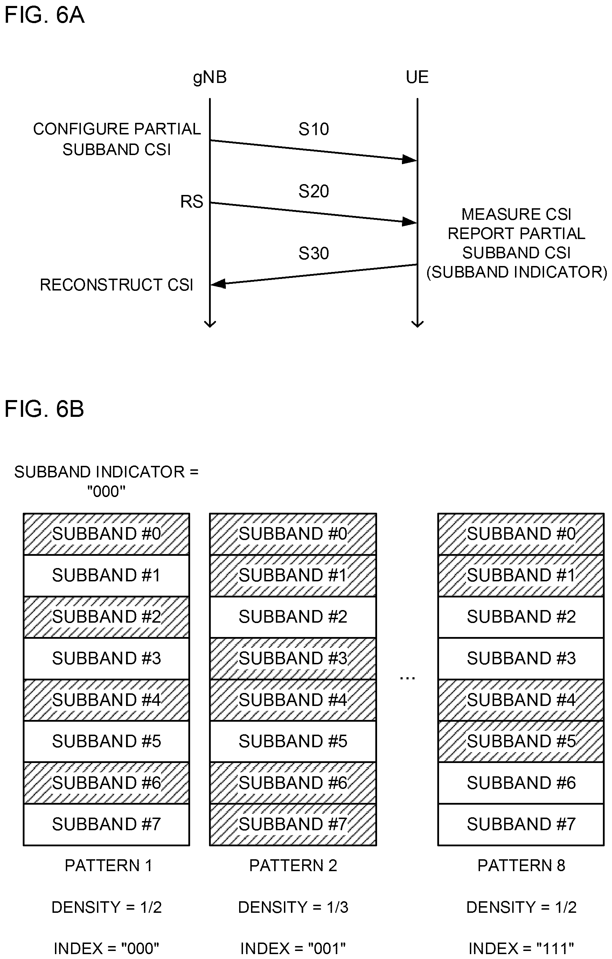

As illustrated in Fig. 6A, in S10, the gNB may configure partial subband CSI reporting configuration information to the UE.

Subsequently, the UE may select one subband pattern. In S30, the UE may report the subband indicator that indicates the selected subband pattern to the gNB.

If only one subband pattern is specified in advance, the UE does not need to select the subband pattern (the UE does not need to report the subband indicator). The UE may use fixed subbands indicated by the subband pattern for the CSI reporting.

If subband patterns the number of which is larger than 1 are specified in advance, the UE needs to select a subband pattern. When eight subband patterns are specified in advance, the subband indicator may be 3 bits ("000" to "111"). When, for example, the UE selects the subband pattern 1 as illustrated in Fig. 6B, the UE may report "000" as the subband indicator".

In addition, similar to the subband indication parameter according to aspect 1-1-2, the subband indicator may include at least one of the parameter (starting_subband) that indicates the starting point of subbands for a CSI reporting, and the parameter (the ratio or the density) that indicates the ratio or the density of the subbands for the CSI reporting.

According to this aspect 1-2-1, the gNB does not need to notify the UE of the subbands for the CSI reporting. Furthermore, the UE can suppress an overhead of a reporting using the selected subbands.

In addition, similar to the subband indication parameter according to aspect 1-1-2, the subband indicator may include at least one of the parameter that indicates the starting point of the subbands for the CSI reporting selected by the UE, the parameter that indicates a ratio (the density or the quantity) related to the subbands for the CSI reporting, and the number of contiguous subbands for the CSI reporting.

### <<Aspect 1-2-2>>

The UE may flexibly select subbands based on a CSI parameter, and report the selected subband pattern to the gNB. A new CSI parameter (e.g., a subband indicator or subband_indicator (SI)) that indicates the selected subbands may be introduced. The subband indicator may be a bitmap that includes a bit associated with each subband. Each bit may indicate whether or not the associated subband has been selected.

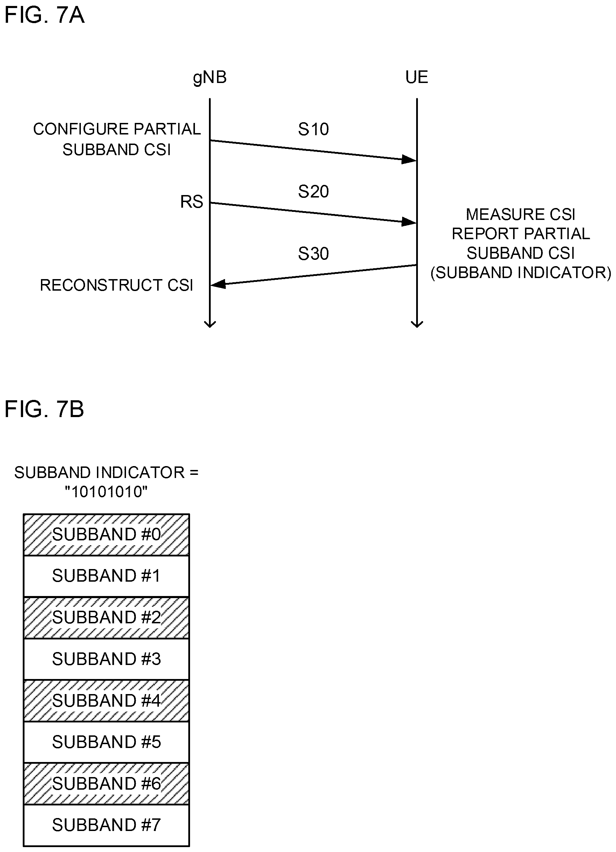

As illustrated in Fig. 7A, in S10, the gNB may configure a partial subband CSI configuration that indicates a configuration to obtain the partial subband CSI to the UE.

Subsequently, the UE may select at least one subband for the CSI reporting. In S30, the UE may report the subband indicator that indicates the selected subbands to the gNB.

The UE may select the subbands for the CSI reporting from all subbands. The subband indicator may be a bitmap that has a bit length of the number of subbands. Each bit may indicate whether or not an associated subband has been selected (whether or not the associated subband is used for the CSI reporting or whether or not the associated subband is included in the specific subband). When, for example, the subband indicator that indicates eight subbands is "10101010", the subband pattern illustrated in Fig. 7B is configured to the UE. In this regard, "1" indicates that the associated subband has been selected, and "0" indicates that the associated subband is not selected.

According to this aspect 1-2-2, by selecting each subband for a CSI reporting, the UE can flexibly select subbands for the CSI reporting. By flexibly selecting the subbands for the CSI reporting according to a situation, the UE can enhance accuracy of the partial subband CSI reporting. Furthermore, the gNB does not need to notify the UE of the subbands for the CSI reporting.

### <<Aspect 1-3>>

Subband selection by the gNB (aspect 1-1) and subband selection by the UE (aspect 1-2) may be combined.

The gNB may select (determine) at least one subband pattern candidate from a plurality of subband patterns specified in advance. The gNB may configure at least one subband pattern candidate to the UE based on a subband pattern list (a plurality of subband pattern indication parameters or multiple_subband_patterns). The subband pattern list may indicate an index of at least one subband pattern.

The subband pattern list may be notified by at least one of an RRC signaling, an MAC CE and DCI. The subband pattern list may be included in partial subband CSI reporting configuration information, or may be notified to the UE by another signaling.

The UE may select (determine) one subband pattern from the configured subband patterns (the subband pattern candidates indicated by the subband pattern list), and report the selected subband pattern to the gNB. A new CSI parameter (e.g., a subband indicator or subband_indicator (SI)) that indicates the selected subband pattern may be introduced. The subband indicator may indicate an index of the selected subband pattern.

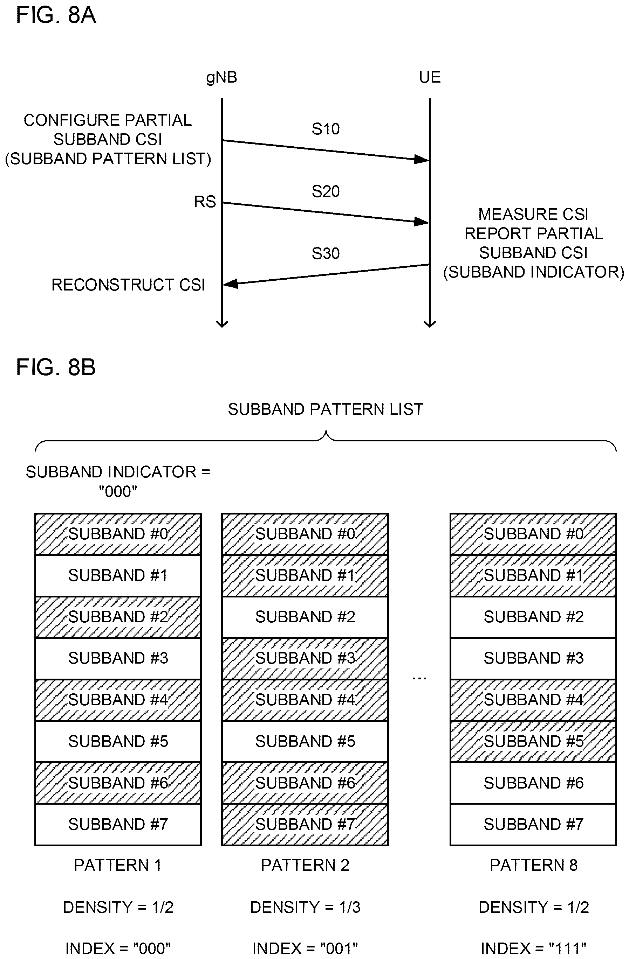

As illustrated in Fig. 8A, in S10, the gNB may configure the subband pattern list to the UE.

The UE may select one subband pattern from the configured subband patterns. In S30, the UE may report the subband indicator indicated by the selected subband pattern to the gNB.

If only one subband pattern is configured to the UE, the UE does not need to select the subband pattern (the UE does not need to report the subband indicator). The UE may use fixed subbands indicated by the subband pattern for the CSI reporting.

If subband patterns the number of which is larger than 1 are configured to the UE, the UE needs to select a subband pattern. When eight subband patterns are configured to the UE, the subband indicator may be 3 bits. As illustrated in, for example, Fig. 8B, a subband indicator "000" may indicate the subband pattern 1.

According to aspect 1-3, the gNB limits subband patterns, and the UE selects one subband pattern from the limited subband patterns, so that it is possible to flexibly configure subbands. Furthermore, the gNB limits the subband patterns, so that it is possible to suppress an overhead of notification of the subband pattern from the gNB to the UE. Furthermore, the UE selects one subband pattern from the limited subband patterns, so that it is possible to suppress an overhead of notification of the subband pattern from the UE to the gNB.

### <<UE Operation>>

A UE operation of a partial subband CSI reporting according to aspects 1-1 and 1-2 will be described.

According to aspect 1-1, if the CSI reporting configuration information (a higher layer parameter or CSI-ReportConfig) is configured to the UE, and the CSI reporting configuration information includes at least one of a subband pattern indication parameter (subband_pattern), a parameter (starting_subband) that indicates a starting point and a parameter (a ratio or a density) that indicates a ratio, the UE may report a CSI parameter of only subbands configured based on the CSI reporting configuration information.

According to aspects 1-2 and 1-3, if the CSI reporting configuration information is configured to the UE, and the CSI reporting configuration information includes at least one of a partial subband CSI indication parameter (partial_subband_CSI) and a subband pattern list (multiple_subband_patterns), the UE may select subbands, and report the selected subbands using a CSI parameter (a subband indicator or subband_indicator). The UE may report the CSI parameter of only the selected subbands.

According to this UE operation, the UE can appropriately perform a partial subband CSI reporting based on a higher layer parameter.

### <Aspect 2>

Aspect 2 will describe a CSI parameter encoding scheme for a partial subband CSI reporting.

The partial subband CSI reporting may include a subband indicator (subband_indicator: SI) as a new CSI parameter in aspects 1-2 and 1-3.

Since an overhead of the CSI reporting is relatively fixed, and the SI is important, the SI may be arranged before a padding bit among a plurality of CSI parameters in one CSI reporting packet.

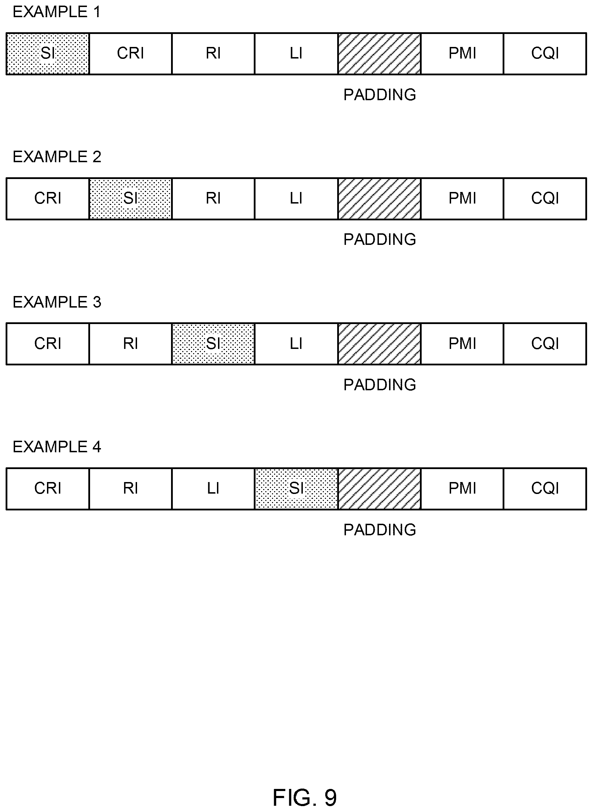

An order of CSI parameters may be one of examples 1-1 to 1-4 as illustrated in Fig. 9.

### (Example 1-1)

- SI, CRI, RI, LI, padding bit, PMI, CQI

### (Example 1-2)

- CRI, SI, RI, LI, padding bit, PMI, CQI

### (Example 1-3)

- CRI, RI, SI, LI, padding bit, PMI, CQI

### (Example 1-4)

- CRI, RI, LI, SI, padding bit, PMI, CQI

The SI may be joined to at least one of the CRI, the RI and the LI among a plurality of CSI parameters in two CSI reporting packets, and encoded.

A packet 1 of the two CSI reporting packets may include at least one of the SI, the CRI, the RI and the LI, and a packet 2 may include at least one of the PMI and the CQI.

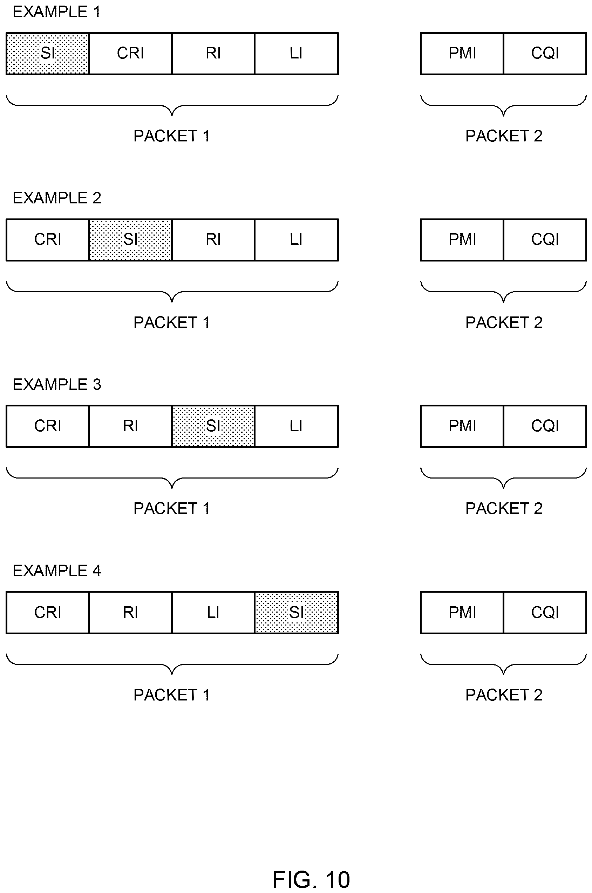

An order of the CSI parameters may be one of examples 2-1 to 2-4 as illustrated in Fig. 10. The SI may be arranged before at least one of the CRI, the RI and the LI in the packet 1 as in the example 2-1 to the example 2-3, or may be arranged after the CRI, the RI or the LI as in the

### example 2-4.

### (Example 2-1)

- Packet 1 = SI, CRI, RI, LI
- Packet 2 = PMI, CQI

### (Example 2-2)

- Packet 1 = CRI, SI, RI, LI
- Packet 2 = PMI, CQI

### (Example 2-3)

- Packet 1 = CRI, RI, SI, LI
- Packet 2 = PMI, CQI

### (Example 2-4)

- Packet 1 = CRI, RI, LI, SI
- Packet 2 = PMI, CQI

According to this aspect 2, the UE can report the selected SI. The gNB can appropriately decode the SI and other CSI parameters.

### (Radio Communication System)

The configuration of the radio communication system according to one embodiment of the present disclosure will be described below. This radio communication system uses one or a combination of the radio communication method according to each of the above embodiment of the present disclosure to perform communication.

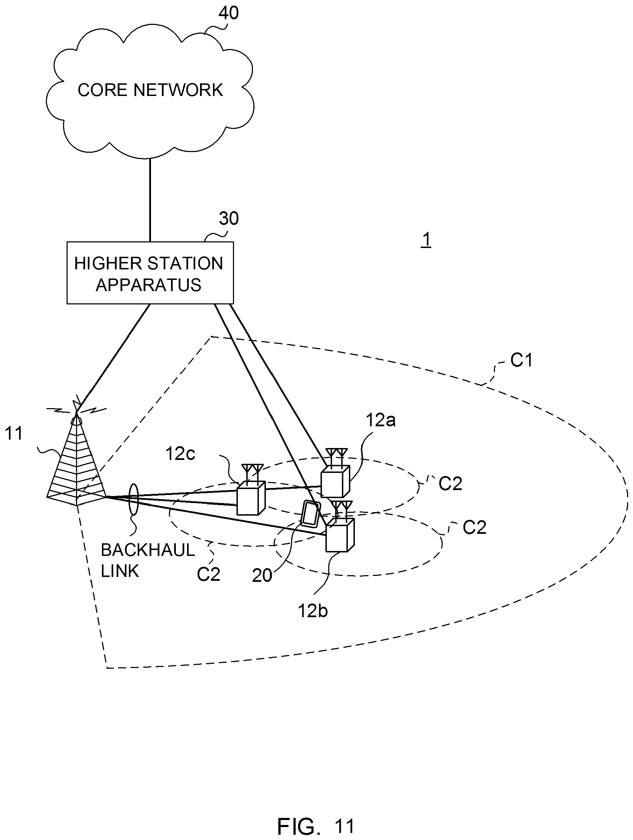

Fig. 11 is a diagram illustrating one example of a schematic configuration of the radio communication system according to the one embodiment. A radio communication system 1 can apply at least one of Carrier Aggregation (CA) and Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a base station 11 that forms a macro cell C1 of a relatively wide coverage, and base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 11.

The user terminal 20 can connect with both of the base station 11 and the base stations 12. The user terminal 20 is assumed to concurrently use the macro cell C1 and the small cells C2 by using CA or DC. Furthermore, the user terminal 20 can apply CA or DC by using a plurality of cells (CCs).

The user terminal 20 and the base station 11 can communicate by using a carrier (also referred to as a legacy carrier) of a narrow bandwidth in a relatively low frequency band (e.g., 2 GHz). On the other hand, the user terminal 20 and each base station 12 may use a carrier of a wide bandwidth in a relatively high frequency band (e.g., 3.5 GHz or 5 GHz) or may use the same carrier as that used between the user terminal 20 and the base station 11. In this regard, a configuration of the frequency band used by each base station is not limited to this.

Furthermore, the user terminal 20 can perform communication by using at least one of Time Division Duplex (TDD) and Frequency Division Duplex (FDD) in each cell. Furthermore, each cell (carrier) may be applied a single numerology or may be applied a plurality of different numerologies.

The numerology may be a communication parameter to be applied to at least one of transmission and reception of a certain signal or channel, and may indicate at least one of, for example, a subcarrier spacing, a bandwidth, a symbol length, a cyclic prefix length, a subframe length, a TTI length, the number of symbols per TTI, a radio frame configuration, specific filtering processing performed by a transceiver in a frequency domain, and specific windowing processing performed by the transceiver in a time domain.

For example, a case where at least ones of subcarrier spacings of constituent OFDM symbols and the numbers of OFDM symbols are different on a certain physical channel may be read as that numerologies are different.

The base station 11 and each base station 12 (or the two base stations 12) may be connected by way of wired connection (e.g., optical fibers compliant with a Common Public Radio Interface (CPRI) or an X2 interface) or radio connection.

The base station 11 and each base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each base station 12 may be connected with the higher station apparatus 30 via the base station 11.

In this regard, the base station 11 is a base station that has a relatively wide coverage, and may be referred to as a macro base station, an aggregate node, an eNodeB (eNB) or a transmission/reception point. Furthermore, each base station 12 is a base station that has a local coverage, and may be referred to as a small base station, a micro base station, a pico base station, a femto base station, a Home eNodeB (HeNB), a Remote Radio Head (RRH) or a transmission/reception point. The base stations 11 and 12 will be collectively referred to as a base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies at least one of Single Carrier-Frequency Division Multiple Access (SC-FDMA) and OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink control channel as downlink channels. User data, higher layer control information and a System Information Block (SIB) are conveyed on the PDSCH. Furthermore, a Master Information Block (MIB) is conveyed on the PBCH.

The downlink control channel includes a Physical Downlink Control Channel (PDCCH), an Enhanced Physical Downlink Control Channel (EPDCCH), a Physical Control Format Indicator Channel (PCFICH), and a Physical Hybrid-ARQ Indicator Channel (PHICH). Downlink Control Information (DCI) including scheduling information of at least one of the PDSCH and the PUSCH is conveyed on the PDCCH.

In addition, DCI for scheduling DL data reception may be referred to as a DL assignment, and DCI for scheduling UL data transmission may be referred to as a UL grant.

The number of OFDM symbols used for the PDCCH may be conveyed on the PCFICH. Transmission acknowledgement information (also referred to as, for example, retransmission control information, HARQ-ACK or ACK/NACK) of a Hybrid Automatic Repeat reQuest (HARQ) for the PUSCH may be conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### (Base Station)

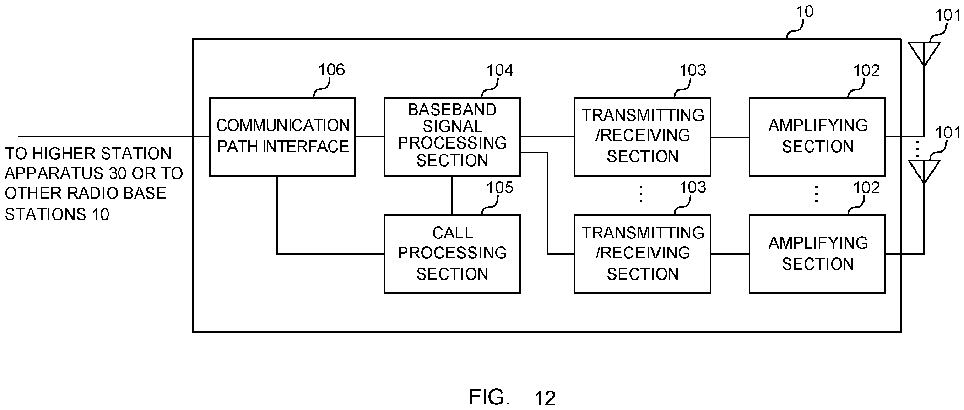

Fig. 12 is a diagram illustrating one example of an overall configuration of the base station according to the one embodiment. The base station 10 includes pluralities of transmission/reception antennas 101, amplifying sections 102 and transmission/reception sections 103, a baseband signal processing section 104, a call processing section 105 and a channel interface 106. In this regard, the base station 10 only needs to be configured to include one or more of each of the transmission/reception antennas 101, the amplifying sections 102 and the transmission/reception sections 103.

User data transmitted from the base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmission/reception section 103. Furthermore, the baseband signal processing section 104 performs transmission processing such as channel coding and inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency range, and transmits a radio frequency signal. The radio frequency signal subjected to frequency conversion by each transmission/reception section 103 is amplified by each amplifying section 102, and is transmitted from each transmission/reception antenna 101. The transmission/reception sections 103 can be composed of transmitters/receivers, transmission/reception circuits or transmission/reception apparatuses described based on a common knowledge in a technical field according to the present disclosure. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmission/reception section 103 receives the uplink signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the channel interface 106. The call processing section 105 performs call processing (such as configuration and release) of a communication channel, state management of the base station 10 and radio resource management.

The channel interface 106 transmits and receives signals to and from the higher station apparatus 30 via a given interface. Furthermore, the channel interface 106 may transmit and receive (backhaul signaling) signals to and from the another base station 10 via an inter-base station interface (e.g., optical fibers compliant with the Common Public Radio Interface (CPRI) or the X2 interface).

In addition, each transmission/reception section 103 may transmit configuration information (e.g., at least one of a CSI-MeasConfig Information Element (IE), a CSI-ResourceConfig IE or a CSI-ReportConfig IE of RRC) related to measurement (or a measurement reporting or a reporting) for Channel State Information (CSI) to the user terminal 20. Each transmission/reception section 103 may receive the CSI transmitted from the user terminal 20.

Furthermore, each transmission/reception section 103 may transmit at least one configuration information (configuration information (e.g., at least one of a CSI-MeasConfig Information Element (IE), a CSI-ResourceConfig IE and a CSI-ReportConfig IE of RRC) related to measurement (or a measurement reporting or a reporting) for Channel State Information (CSI)) to the user terminal 20.

Furthermore, each transmission/reception section 103 may receive a CSI reporting that uses at least one specific subband that is part of a plurality of subbands.

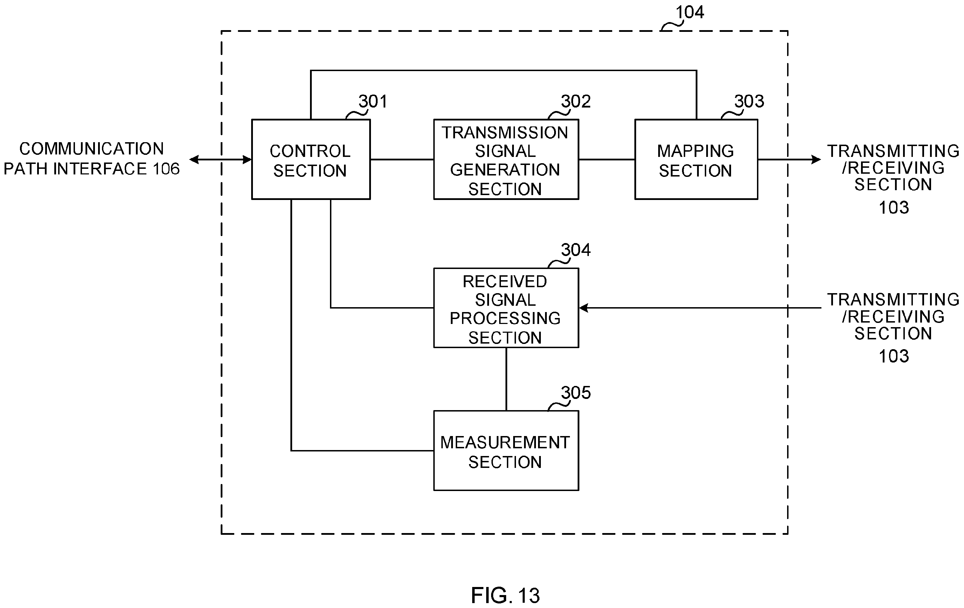

Fig. 13 is a diagram illustrating one example of a function configuration of the base station according to the one embodiment. In addition, this example mainly illustrates function blocks of characteristic portions according to the present embodiment, and may assume that the base station 10 includes other function blocks, too, that are necessary for radio communication.

The baseband signal processing section 104 includes at least a control section (scheduler) 301, a transmission signal generating section 302, a mapping section 303, a received signal processing section 304 and a measurement section 305. In addition, these components only need to be included in the base station 10, and part or all of the components may not be included in the baseband signal processing section 104.

The control section (scheduler) 301 controls the entire base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted by using a downlink shared channel), and a downlink control signal (e.g., a signal that is transmitted by using a downlink control channel). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a Primary Synchronization Signal (PSS)/a Secondary Synchronization Signal (SSS)) and downlink reference signals (e.g., a CRS, a CSI-RS and a DMRS).

The control section 301 controls scheduling of an uplink data signal (e.g., a signal that is transmitted by using an uplink shared channel), an uplink control signal (e.g., a signal that is transmitted by using an uplink control channel), a random access preamble and an uplink reference signal.

The transmission signal generating section 302 generates a downlink signal (such as a downlink control signal, a downlink data signal or a downlink reference signal) based on an indication from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates at least one of, for example, a DL assignment for giving notification of downlink data allocation information, and a UL grant for giving notification of uplink data allocation information based on the indication from the control section 301. The DL assignment and the UL grant are both DCI, and conform to a DCI format. Furthermore, the transmission signal generating section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generating section 302, on given radio resources based on the indication from the control section 301, and outputs the downlink signal to each transmission/reception section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmission/reception section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs at least one of the received signal and the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

Furthermore, the control section 301 may perform at least one of transmission of configuration information that indicates the specific bands, and reception of reporting information that indicates the specific subbands.

### (User Terminal)

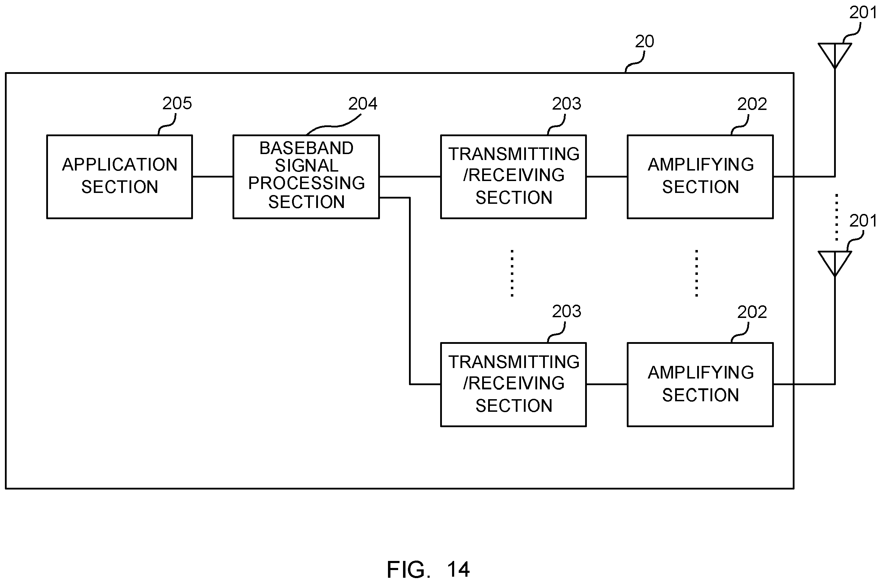

Fig. 14 is a diagram illustrating one example of an overall configuration of the user terminal according to the one embodiment. The user terminal 20 includes pluralities of transmission/reception antennas 201, amplifying sections 202 and transmission/reception sections 203, a baseband signal processing section 204 and an application section 205. In this regard, the user terminal 20 only needs to be configured to include one or more of each of the transmission/reception antennas 201, the amplifying sections 202 and the transmission/reception sections 203.

Each amplifying section 202 amplifies a radio frequency signal received at each transmission/reception antenna 201. Each transmission/reception section 203 receives a downlink signal amplified by each amplifying section 202. Each transmission/reception section 203 performs frequency conversion on the received signal into a baseband signal, and outputs the baseband signal to the baseband signal processing section 204. The transmission/reception sections 203 can be composed of transmitters/receivers, transmission/reception circuits or transmission/reception apparatuses described based on the common knowledge in the technical field according to the present disclosure. In this regard, the transmission/reception sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmission/reception section 203.

Each transmission/reception section 203 converts the baseband signal output from the baseband signal processing section 204 into a radio frequency range, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 may receive the at least one configuration information (configuration information (e.g., at least one of a CSI-MeasConfig Information Element (IE), a CSI-ResourceConfig IE or a CSI-ReportConfig IE of RRC) related to measurement (or the measurement reporting or the reporting) for the Channel State Information (CSI)). A measurement section 405 may perform measurement based on the configuration information.

Furthermore, each transmission/reception section 203 may transmit the CSI reporting that uses at least one specific subband (a subband for the CSI reporting or a selected subband) that is part of a plurality of subbands.

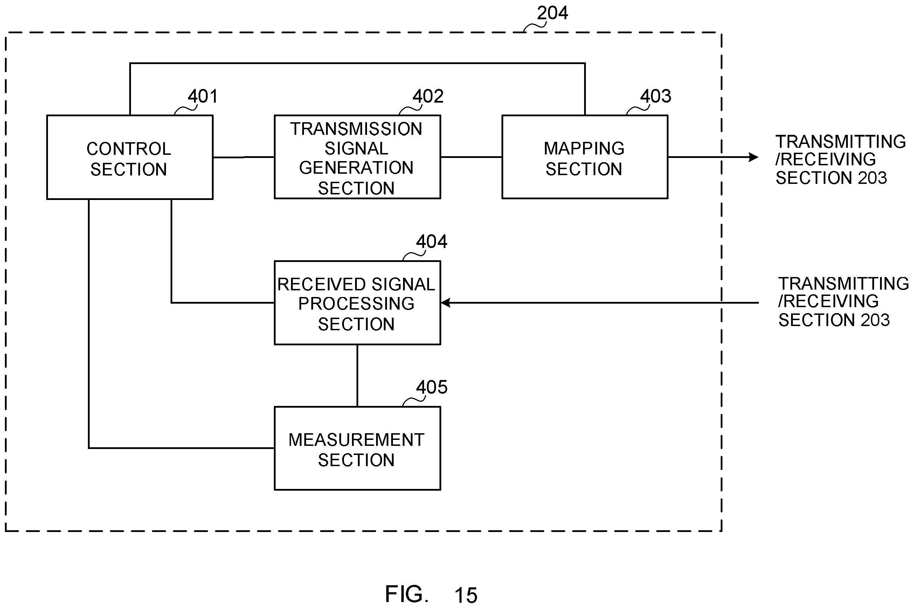

Fig. 15 is a diagram illustrating one example of a function configuration of the user terminal according to the one embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least a control section 401, a transmission signal generating section 402, a mapping section 403, a received signal processing section 404 and the measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the base station 10. The control section 401 controls generation of an uplink control signal and an uplink data signal based on the downlink control signal as a result of deciding whether or not it is necessary to perform retransmission control on the downlink data signal.

When obtaining from the received signal processing section 404 various pieces of information notified from the base station 10, the control section 401 may update parameters used for control based on the various pieces of information.

The transmission signal generating section 402 generates an uplink signal (such as an uplink control signal, an uplink data signal or an uplink reference signal) based on an indication from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates, for example, an uplink control signal related to transmission acknowledgement information and Channel State Information (CSI) based on the indication from the control section 401. Furthermore, the transmission signal generating section 402 generates an uplink data signal based on the indication from the control section 401. When, for example, the downlink control signal notified from the base station 10 includes a UL grant, the transmission signal generating section 402 is instructed by the control section 401 to generate an uplink data signal.

The mapping section 403 maps the uplink signal generated by the transmission signal generating section 402, on radio resources based on the indication from the control section 401, and outputs the uplink signal to each transmission/reception section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmission/reception section 203. In this regard, the received signal is, for example, a downlink signal (such as a downlink control signal, a downlink data signal or a downlink reference signal) transmitted from the base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs at least one of the received signal and the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure. The measurement section 405 may compose at least part of the reception section according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

Furthermore, the control section 401 may perform at least one of reception of the configuration information (partial subband CSI reporting configuration information) that indicates that specific subbands, and transmission of the reporting information (a CSI parameter or a subband indicator) that indicates the specific subbands.

Furthermore, the configuration information may indicate at least one of identification information (subband pattern indication parameter) that indicates one of a plurality of patterns of the specific subbands, the quantity (subband indication parameter) of the specific subbands, and whether or not each of a plurality of these subbands is included in the specific subbands (subband selection parameter).

Furthermore, the CSI reporting may include the reporting information.

Furthermore, the reporting information may indicate at least one of the identification information that indicates the pattern of the specific subbands, the quantity of the specific subbands, and whether or not each of a plurality of these subbands is included in the specific subbands.

Furthermore, the configuration information may include candidate identification information (subband pattern list) that indicates at least one candidate of the specific subbands. The control section 401 may determine the specific subbands from the at least one candidate indicated by the candidate identification information. The reporting information may include the identification information (subband indicator) that indicates the pattern of the specific subbands.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

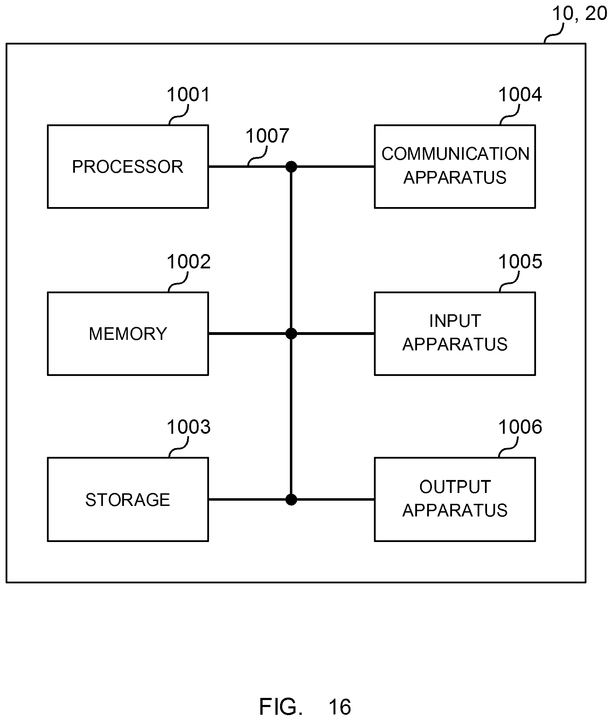

For example, the base station and the user terminal according to the one embodiment of the present disclosure may function as computers that perform processing of the radio communication method according to the present disclosure. Fig. 16 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 16 or may be configured without including part of the apparatuses.

For example, Fig. 16 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmission/reception sections 103 (203) and channel interface 106 may be realized by the communication apparatus 1004. Each transmission/reception section 103 may be physically or logically separately implemented as a transmission section 103a and a reception section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a transmission section that transmits a CSI reporting using at least one specific subband that is part of a plurality of subbands; and
a control section that performs at least one of reception of configuration information that indicates the specific subband, and transmission of reporting information that indicates the specific subband.

2. The user terminal according to claim 1, wherein the configuration information indicates at least one of identification information that indicates one of a plurality of patterns of the specific subband, a quantity of the specific subband, and whether or not each of the plurality of subbands is included in the specific subband.

3. The user terminal according to claim 1, wherein the CSI reporting includes the reporting information.

4. The user terminal according to claim 3, wherein the reporting information indicates at least one of identification information that indicates a pattern of the specific subband, a quantity of the specific subband, and whether or not each of the plurality of subbands is included in the specific subband.

5. The user terminal according to claim 3, wherein
the configuration information includes candidate identification information that indicates at least one candidate of the specific subband,
the control section determines the specific subband from the at least one candidate indicated by the candidate identification information, and
the reporting information includes identification information that indicates a pattern of the specific subband.

6. A base station comprising:
a reception section that receives a CSI reporting using at least one specific subband that is part of a plurality of subbands; and
a control section that performs at least one of transmission of configuration information that indicates the specific subband, and reception of reporting information that indicates the specific subband.
